# EUROPEAN PATENT APPLICATION

(11) **EP 4 832 490 A1**
(43) Date of publication of application: **28.10.2026**
(21) Application number: 25305577.6
(22) Date of filing: 22.04.2025
(51) Int. Cl.: H04N 19/46, H04N 19/597

(54) **TRANSMISSION OF ORDERED ATTRIBUTES FOR PROGRESSIVE RENDERING**

(71) Applicant: InterDigital CE Patent Holdings, SAS, 75017 Paris (FR)
(72) Inventor: THUDOR, Franck, 35000 RENNES (FR); SANDRI, Gustavo, 35510 CESSON-SEVIGNE (FR); CHUPEAU, Bertrand, 35700 RENNES (FR); SABATER, Neus, 35830 BETTON (FR); KRIVOKUCA, Maja, 35000 RENNES (FR)
(74) Representative: Vossius & Partner Patentanwälte Rechtsanwälte mbB

(57) **Abstract**

A method of decoding a 3D Gaussian splatting, 3DGS, model according to some embodiments comprises decoding position information for each of a plurality of Gaussian primitives in the 3DGS model. After decoding the position information, one-dimensional scale information is decoded for each of the plurality of Gaussian primitives. After decoding the one-dimensional scale information, orientation information and supplemental scale information is decoded for each of the plurality of Gaussian primitives. The 3DGS model is progressively rendered based on at least some of the decoded information.

## Description

### BACKGROUND

The present application is related to coding of 3D Gaussian splatting (3DGS) models. Neural Radiance Fields (NeRFs) have proved to be a remarkable method to render new views of a complex scene from a limited number of captured views. Computational complexity remains the main bottleneck of this method since NeRFs aim at evaluating the scene luminance for all the points of a 3D volume. On the other hand, 3D Gaussian splatting has emerged as a new scene representation that is able to render 3D radiance fields with a quality comparable to NeRF but much faster. 3D Gaussian splatting avoids unnecessary computation in the empty space in order to decrease training time and achieve real-time rendering.

Gaussian splatting has already been used in the past in the computer graphics community but has grown in popularity with the advent of artificial intelligence and the arrival of very powerful GPUs and new learning techniques.

### SUMMARY

Briefly stated, in one embodiment, a method comprises: decoding position information for each of a plurality of Gaussian primitives in a 3D Gaussian splatting, 3DGS, model; after decoding the position information, decoding one-dimensional scale information for each of the plurality of Gaussian primitives; after decoding the one-dimensional scale information, decoding orientation information and supplemental scale information for each of the plurality of Gaussian primitives; and progressively rendering the 3DGS model based on at least some of the decoded information.

An apparatus according to some embodiments comprises one or more processors configured to perform at least: decoding position information for each of a plurality of Gaussian primitives in a 3D Gaussian splatting, 3DGS, model; after decoding the position information, decoding one-dimensional scale information for each of the plurality of Gaussian primitives; after decoding the one-dimensional scale information, decoding orientation information and supplemental scale information for each of the plurality of Gaussian primitives; and progressively rendering the 3DGS model based on at least some of the decoded information.

In some embodiments, progressively rendering the 3DGS model comprises: rendering the 3DGS model as a point cloud using at least the position information without the one-dimensional scale information; and subsequently rendering the 3DGS model, further using the one-dimensional scale information.

In some embodiments, progressively rendering the 3DGS model comprises: rendering the 3DGS model using at least the position information and the one-dimensional scale information without the orientation information and without the supplemental scale information; and subsequently rendering the 3DGS model, further using the orientation information and the supplemental scale information.

Some embodiments further include: after decoding the position information, decoding isotropic color information for each of the plurality of Gaussian primitives; and after decoding the isotropic color information, decoding anisotropic color information for each of the plurality of Gaussian primitives.

In some embodiments, progressively rendering the 3DGS model comprises: rendering the 3DGS model using at least the position information and the isotropic color information without the anisotropic color information; and subsequently rendering the 3DGS model, further using the anisotropic color information.

Some embodiments further include: after decoding the position information, decoding opacity information for each of the plurality of Gaussian primitives; wherein progressively rendering the 3DGS model comprises: rendering the 3DGS model using at least the position information without the opacity information; and subsequently rendering the 3DGS model, further using the opacity information.

A method according to some embodiments comprises: obtaining information describing a 3D Gaussian splatting, 3DGS, model including a plurality of Gaussian primitives, the model including position information and three-dimensional scale information for each of the Gaussian primitives; encoding the position information in a bitstream; deriving one-dimensional scale information from the three-dimensional scale information; encoding the one-dimensional scale information in the bitstream, the one-dimensional scale information being encoded at a location in the bitstream after a location of the position information; and encoding supplemental scale information in the bitstream, the supplemental scale information being encoded at a location in the bitstream after a location of the one-dimensional scale information, the three-dimensional scale information being derivable from the supplemental scale information alone or in combination with the one-dimensional scale information.

An apparatus according to some embodiments comprises one or more processors configured to perform at least: obtaining information describing a 3D Gaussian splatting, 3DGS, model including a plurality of Gaussian primitives, the model including position information and three-dimensional scale information for each of the Gaussian primitives; encoding the position information in a bitstream; deriving one-dimensional scale information from the three-dimensional scale information; encoding the one-dimensional scale information in the bitstream, the one-dimensional scale information being encoded at a location in the bitstream after a location of the position information; and encoding supplemental scale information in the bitstream, the supplemental scale information being encoded at a location in the bitstream after a location of the one-dimensional scale information, the three-dimensional scale information being derivable from the supplemental scale information alone or in combination with the one-dimensional scale information.

In some embodiments, the position information, the one-dimensional scale information, and the supplemental scale information are encoded in different attribute data units.

Some embodiments further include: obtaining color information for each of the Gaussian primitives, the color information including isotropic color information and anisotropic color information for each of the plurality of Gaussian primitives; encoding the isotropic color information in the bitstream, the isotropic color information being encoded at a location in the bitstream after a location of the position information; and encoding the anisotropic color information in the bitstream, the anisotropic color information being encoded at a location in the bitstream after a location of the one-dimensional scale information.

In some embodiments, the position information, the one-dimensional scale information, the supplemental scale information, the isotropic color information, and the anisotropic color information are encoded in different attribute data units.

Some embodiments further include: obtaining opacity information for each of the Gaussian primitives; and encoding the opacity information in the bitstream, the opacity information being encoded at a location in the bitstream after a location of the position information.

In some embodiments, the position information, the one-dimensional scale information, the supplemental scale information, and the opacity information are encoded in different attribute data units.

A bitstream according to some embodiments comprises: a first attribute data unit comprising position information for each of a plurality of Gaussian primitives in a 3D Gaussian splatting, 3DGS, model; a second attribute data unit comprising one-dimensional scale information for each of the Gaussian primitives; a third attribute data unit comprising supplemental scale information for each of the Gaussian primitives, wherein three-dimensional scale information is derivable from the supplemental scale information alone or in combination with the one-dimensional scale information; a fourth attribute data unit comprising orientation information for each of the Gaussian primitives; a fifth attribute data unit comprising opacity information for each of the Gaussian primitives; a sixth attribute data unit comprising anisotropic color information for each of the Gaussian primitives; and a seventh attribute data unit comprising isotropic color information for each of the Gaussian primitives; wherein the first attribute data unit is before the second through seventh attribute data units, and wherein the second attribute data unit is before the third attribute data unit.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.
FIGs. 1A-1D schematically illustrate progressive rendering of a 3DGS model. In FIG. 1A, each Gaussian primitive in the 3DGS model is represented by a point at a respective position. In FIG. 1B, Gaussian primitives that were rendered as points in FIG. 1A are now rendered as spherically-symmetric Gaussians with sizes based on the simplified scale parameters. In FIG. 1C, Gaussian primitives are now rendered using the complete multi-dimensional scale and orientation information. In FIG. 1D, Gaussian primitives are now rendered using the opacity information.
FIG. 2 is a schematic illustration of a bitstream structure that may be used in some embodiments.
FIG. 3 is a flow diagram illustrating a decoding and progressive rendering method according to some embodiments.
FIG. 4 is a flow diagram illustrating an encoding method according to some embodiments.
FIG. 5 is a functional block diagram illustrating an apparatus comprising one or more processors on which methods described herein may be implemented in some embodiments.

### DETAILED DESCRIPTION

One disadvantage of 3D Gaussian splatting is that it calls for a large amount of memory for the storage of the Gaussians. As described in Kerbl, B. K. (2023), "3D Gaussian Splatting for Real-Time Radiance Field Rendering, ACM Transactions on Graphics (TOG), pp. 1-14, the memory consumption of 3D Gaussian splatting can be significantly higher than in NeRF-based solutions, which may be a hurdle for the deployment of 3DGS in consumer devices or low-end GPUs. The high memory consumption results in part from the large number of Gaussian primitives due to the densification process during optimization (cloning and splitting). Furthermore, a large number of attributes are used to characterize each Gaussian. When it comes to transmit and render the 3DGS model, the many attributes to transmit leads to a longer bitstream, which in turn leads to latency before the beginning of the reception of the bitstream and the rendering.

Example embodiments operate to transmit the 3DGS attributes in an order that allows a progressive rendering.

As an overview of 3D Gaussians and the image rendering operation, a 3D Gaussian is formally defined as an object in the 3D space $G \left(X\right) = {e}^{- \frac{1}{2} {\left(X-μ\right)}^{T} {Σ}^{- 1} \left(X-μ\right)}$ characterized by its center *µ =* (*x, y, z*), a 3D covariance matrix Σ, where Σ can be decomposed into a scaling matrix *S* (with parameters *s*₁, *s*₂ and *s*₃) and a rotation matrix *R* (encoded into a unit quaternion *q* with coefficients *q*₁*, q*₂ , *q*₃ and *q*₄ ) for differentiable optimization. Besides the geometric description of each 3D Gaussian, other attributes are considered such as the opacity *α* and the color *c*, which is usually a list of spherical harmonics {*cₙ*|*n* = 0, ... , *N*}.

Given a list of 3D Gaussians representing a 3D scene, and the image position of a new view, a synthetized image can be generated in the new position via the projection of all 3D Gaussians onto the image plane. This operation, also called splatting, corresponds to the *α-*blending of the different Gaussians. In detail, given the sorted list of 3D Gaussians M, the color of a pixel in the new image is given by the formula $C = {\sum }_{i ∈ M} {c}_{i} α {′}_{i} {\prod }_{j = 1}^{i - 1} \left(1-α{′}_{j}\right)$ (1) where *cᵢ* is the learned color of the *i*-th Gaussian, *α'ⱼ = αⱼ gⱼ*(*x*); *αⱼ* being the *j* -th Gaussian opacity and *gⱼ*(*x*) the *j*-th Gaussian projection on the new image plane.

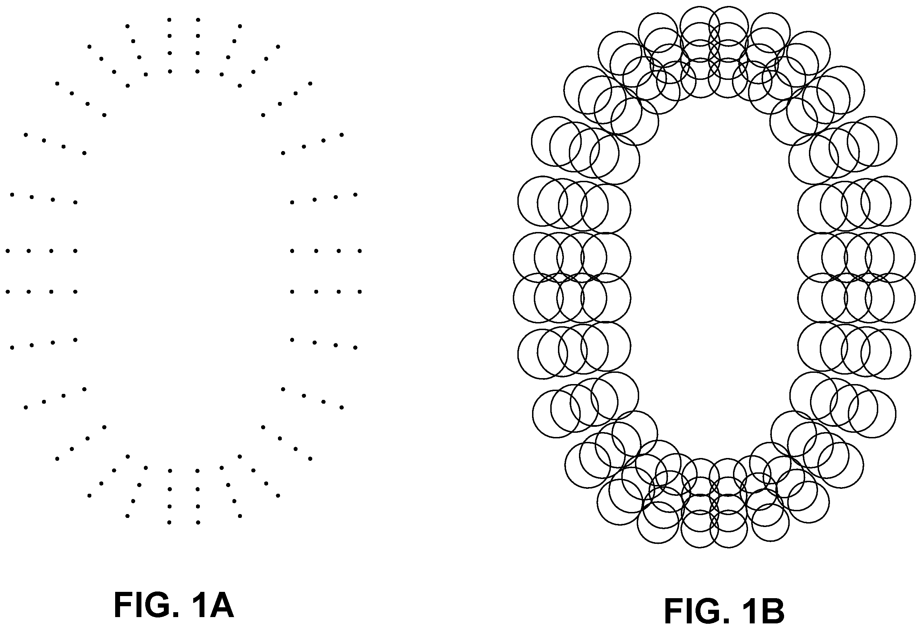

The 3DGS representation has been analyzed to determine which of its elements are the most important to be displayed first, then the second, and so on. In a first embodiment, to allow a progressive rendering, the elements are sorted as explained below based on the analysis. The sorting is summarized in Table 1, in which the dimension of each element is indicated in superscript. FIGs. 1A-1D schematically illustrate progressive renderings of a 3DGS model that may be implemented using coding according to embodiments described herein. For the purposes of illustration, this model represents a simple oval-shaped object, but the principles represented apply also to more complex models and complete 3DGS scenes. It should be understood that, for the sake of illustration, the model of FIGs. 1A-1D includes only a few dozen Gaussian primitives, whereas practical applications of 3DGS models may include thousands or millions of Gaussian primitives.

**Priority 1.** A first set of information may be provided with the highest priority, referred to here as priority 1. In an example embodiment, the information with the highest priority is the position of each Gaussian primitive. Even a point can be displayed with a default color, and it is already meaningful. Even in a case where only position information is available for the Gaussian primitives, those primitives may be rendered in a manner analogous to the rendering of point clouds. This information and the resulting rendering typically enables viewing of some of an object's contours. As illustrated in the schematic example rendering of FIG. 1A, each Gaussian primitive in the 3DGS model is represented by a point at a respective position, and this rendering alone is sufficient to convey the general oval shape of the 3DGS model.

**Priority 2.** A second set of information may be provided with priority 2, after providing the priority 1 information. In an example embodiment, this information gives a size to each Gaussian primitive. This information may be one-dimensional scale information and may be referred to as a simplified scale parameter. It may be used to determine a size for spherically-symmetric Gaussian primitives. In a case where the complete scale information is represented by the three parameters *s*₁, *s*₂, and *s*₃, the simplified scale information for a Gaussian primitive may be represented by *s* and, as one example, may be calculated as follows: $s = {\left({s}_{1}∗{s}_{2}∗{s}_{3}\right)}^{\frac{1}{3}}$

These primitives may be rendered using the same default color used for rendering using position-only information. FIG. 1B is a schematic example rendering of the 3DGS model of FIG. 1A, except that the Gaussian primitives that were rendered as points in FIG. 1A are now rendered as spherically-symmetric Gaussians with sizes based on the simplified scale parameters. The use of the simplified scale information, with different sized Gaussian primitives, provides a better representation of the 3DGS model than a point cloud alone. In FIG. 1B, due to the limitations of formal drawings, each Gaussian is illustrated as an appropriately-sized circle.

**Priority 3.** A third set of information may be provided with priority 3, after providing the priority 2 information. In an example embodiment, this information gives the actual scale information and the quaternion representing rotation. This information allows for rendering of the Gaussian primitives using their actual shape and orientation, improving the rendering quality because of a better alignment with the orientation of the objects within the scene. These scaled and oriented primitives may be rendered with the same default color used for rendering earlier-priority information.

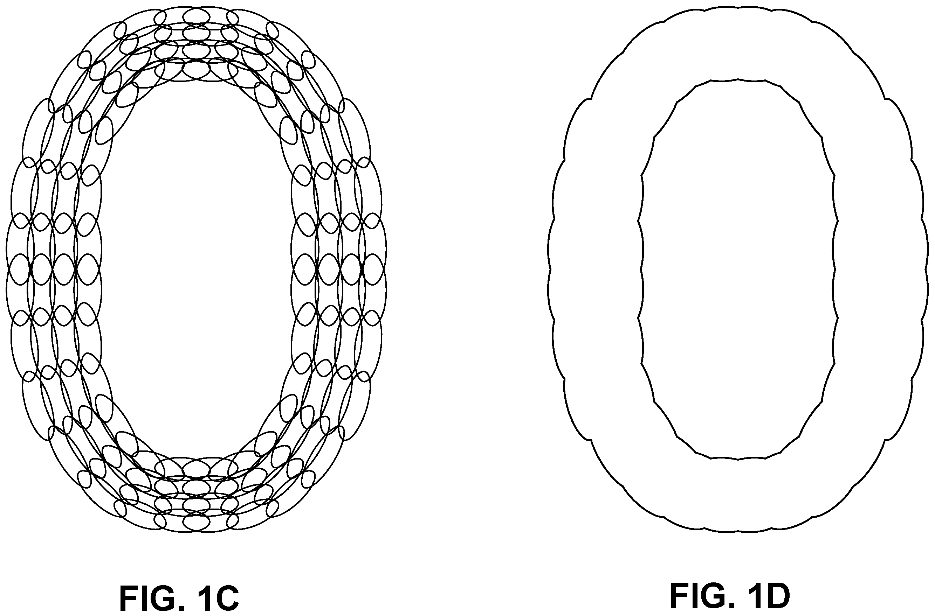

FIG. 1C is a schematic example rendering of the 3DGS model of FIGs. 1A-1B, except that the Gaussian primitives are now rendered using the complete multi-dimensional scale and orientation information. The use of the multi-dimensional scale and orientation information provides a better representation of the 3DGS model than the model with simplified scale information. In FIG. 1C, due to the limitations of formal drawings, each Gaussian is illustrated as an appropriately-sized ellipse.

**Priority 4.** A fourth set of information may be provided with priority 4, after providing the priority 3 information. In an example embodiment, this information indicates the opacity of each Gaussian primitive. Adding the opacity information allows for a rendering with a better look and feel. The primitives with opacity information may be rendered with the same default color used for rendering earlier-priority information.

FIG. 1D is a schematic example rendering of the 3DGS model of FIGs. 1A-1C, except that the Gaussian primitives are now rendered using the opacity information. The use of the opacity information provides a better representation of the 3DGS model, which now appears as a solid object.

**Priority 5.** A fifth set of information may be provided with priority 5, after providing the priority 4 information. In an example embodiment, this information indicates a DC (isotropic, or orientation independent) color of each Gaussian primitive. Adding the DC information allows for a rendering with a more accurate color than the original default color, which may have been a monochrome or black and white rendering.

**Priority 6.** A sixth set of information may be provided with priority 6, after providing the priority 6 information. In an example embodiment, this information indicates higher-order spherical harmonics of the color of each Gaussian primitive, which provide information on the anisotropic properties of the color of each Gaussian primitive. (Conventionally, the DC color components may be referred to as the zeroth-order color components, and higher-order spherical harmonics are those with an order greater than zero.) Adding the anisotropic color information allows a primitive to have different colors when viewed from different angles. This may be the final set of information provided at which point the 3DGS model may be rendered in full.

**Table 1: Example order of the elements of a 3DGS representation for progressive rendering.**

| Order | Element | Aggregated list of elements (with dimension) |
|---|---|---|
| #1 | Position (p³) | p³ |
| #2 | Simplified scale (s¹) | p³, s¹ |
| #3 | Scale (s³) and orientation (q⁴) | p³, s³, q⁴ |
| #4 | Opacity (α¹) | p³, s³, q⁴, α¹ |
| #5 | DC colors = lowest order of SH (sh³) | p³, s³, q⁴, α¹ , sh³ |
| #6 | Higher order SH components (sh^{N}) | p³, s³, q⁴, α¹ , sh^{N} |

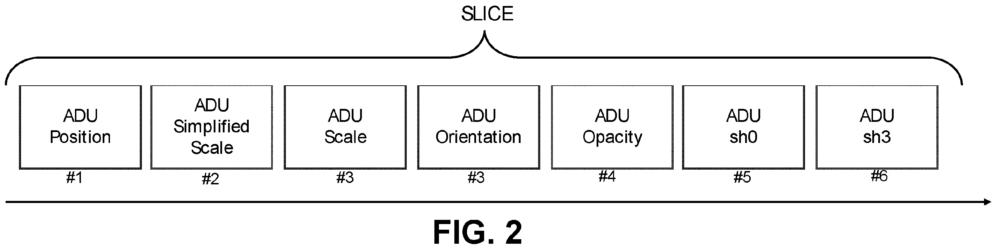

FIG. 2 is a schematic illustration of a bitstream structure that may be used in some embodiments. A first attribute data unit (ADU) is used for the position, subsequent attribute data units are used for each of the other types of attributes. The attribute data units illustrated in FIG. 2 may all be a part of a single slice that is representative of the 3DGS model, or of a subpart of the 3DGS model, at a given time. A slice may also be referred to as a temporal frame.

As seen in the example of FIG. 2, a bitstream according to some embodiments includes a first attribute data unit with position information for each of a plurality of Gaussian primitives in the 3DGS model. The bitstream in this example also includes additional attribute data units with data for each of the Gaussian primitives. A second attribute data unit includes one-dimensional scale information. A third attribute data unit includes orientation information and supplemental scale information. (As described above, the three-dimensional scale information of each Gaussian primitive is derivable either from the supplemental scale information alone or from the supplemental scale information in combination with the one-dimensional scale information.) A fourth attribute data unit includes opacity information. A fifth attribute data unit includes anisotropic color information (e.g. zeroth-order spherical harmonic coefficients). A sixth attribute data unit includes isotropic color information (e.g. non-zero order spherical harmonic coefficients) for each of the Gaussian primitives.

In the example illustrated in FIG. 2, the first attribute data unit, which includes the position information, is before the second through sixth attribute data units. In some embodiments, the second attribute data unit, which includes the one-dimensional scale information, is before the third attribute data unit, which includes the orientation information and the supplemental scale information.

Different embodiments may include variations in which different priority sets of attribute information are eliminated or combined. For example, in some embodiments, the simplified scale value may not be transmitted at all. In that case, the full-scale and quaternion information may be transmitted with the second priority, after the transmission of the position information.

In embodiments where the simplified scale is transmitted, different techniques may be used for the transmission of supplemental scale information. From this supplemental scale information, either alone or in combination with the one-dimensional scale information, the complete multi-dimensional scale information may be obtained. The supplemental scale information may be provided in the set of information sent with priority 3. In some embodiments, the supplemental scale information is sent in a form that does not make any use of the simplified scale information. That is, in such embodiments, the three dimensions of scale information are sent for each Gaussian primitive, and any previously-received simplified scale information can be discarded. In other embodiments, the supplemental scale information relies on the previously received simplified scale information. This allows the complete scale information to be reconstructed partly from the simplified scale information. For example, the complete scale information may be represented by the three parameters *s*₁, *s*₂, and *s*₃. In some embodiments, the simplified scale information indicating a size of each Gaussian primitive is represented by *s* and is calculated as follows. $s = {\left({s}_{1}∗{s}_{2}∗{s}_{3}\right)}^{\frac{1}{3}}$

In such embodiments, the one-dimensional scale information *s* may be coded in one set of information (e.g. in one ADU), and the supplemental scale information may be encoded using two other parameters, such as *s*₁ and *s*₂, in a subsequent set of information. In that case, the third scale parameter *s*₃ does not need to be coded explicitly and instead may be calculated from the other two parameters and the simplified scale *s* as follows: ${s}_{3} = \frac{{\left(s\right)}^{3}}{\left({s}_{1}∗{s}_{2}\right)}$

Alternatively, parameter *s*₁ or *s*₂ may be the uncoded parameter, and it may be calculated from the other parameters as follows: ${s}_{1} = \frac{{\left(s\right)}^{3}}{\left({s}_{3}∗{s}_{2}\right)} or {s}_{2} = \frac{{\left(s\right)}^{3}}{\left({s}_{3}∗{s}_{1}\right)}$ Different arrangements may alternatively be used, so long as at least two parameters are sent in the subsequent set of information, allowing for the reconstruction of all three scale parameters according to a predetermined formula.

Different embodiments may use different coding orders. Example embodiments incorporate the constraint that the positions are coded such that they are sent and received before the other sets of lower-priority attributes. For embodiments that use the simplified scale in the reconstruction of the complete scale values, the simplified scale is coded such that is sent and received before the remaining parameters that are used for the reconstruction of the complete scale information.

The following example, shown in Table 2, exemplifies an alternative order of transmission of the ADUs. A decoder may make a determination to only decode some of the transmitted ADUs, and some order of transmission might be suitable for it. In an example embodiment, having the position and the lowest order of spherical harmonics at the very beginning (sets 1 and 2) results in a sparse point cloud which can be processed by a point cloud renderer, and those elements might be completed by later information (sets 3 through 6).

**Table 2: Another proposed order of the elements of a 3DGS representation for progressive rendering.**

| Order | Element | Aggregated list of elements (with dimension) |
|---|---|---|
| #1 | Position (p³) | p³ |
| #2 | DC colors = lowest order of SH (sh³) | p³, sh³ |
| #3 | Opacity (α¹) | p³, sh³ , α¹ |
| #4 | Simplified scale (s¹) | p³, sh³ , α¹, s¹ |
| #5 | Scale (s³) and orientation (q⁴) | p³, sh³ , α¹ , s³, q⁴ |
| #6 | Higher order SH components (sh^{N}) | p³, sh^{N} , α¹ , s³, q⁴ |

In an example embodiment employing a coding and transmission order as reflected in Table 2, a decoder receives the information in sets 1 and 2 (the positions and DC colors) and renders a point cloud accordingly while the remaining information is being received. Once the remaining information is received (in sets 3 through 6), the rendering of the point cloud may be replaced with a rendering of the full 3DGS model.

Tables 3, 4, and 5 provide examples of other coding orders. For those, the position and the lowest order of spherical harmonics are associated with opacity and simplified scale, which gives a richer point cloud to render than just having position and lowest order of the spherical harmonics, still not being completely a 3DGS model.

**Table 3: Another proposed order of the elements of a 3DGS representation for progressive rendering.**

| Order | Element | Aggregated list of elements (with dimension) |
|---|---|---|
| #1 | Position (p³) | p³ |
| #2 | DC colors = lowest order of SH (sh³) | p³, sh³ |
| #3 | Opacity (α¹) | p³, sh³ , α¹ |
| #4 | Simplified scale (s¹) | p³, sh³ , α¹, s¹ |
| #5 | Scale (s³) and orientation (q⁴) | p³, sh³ , α¹ , s³, q⁴ |
| #6 | Higher order SH components (sh^{N}) | p³, sh^{N} , α¹ , s³, q⁴ |

In an example embodiment employing a coding and transmission order as reflected in Table 3, a decoder receives the information in sets 1 through 4 (the positions, DC colors, opacity, and simplified scale) and renders a simplified 3DGS model accordingly while the remaining information is being received. Once the remaining information is received (in sets 5 and 6), the rendering of simplified 3DGS model may be replaced with a rendering of the full 3DGS model.

**Table 4: Another proposed order of the elements of a 3DGS representation for progressive rendering.**

| Order | Element | Aggregated list of elements (with dimension) |
|---|---|---|
| #1 | Position (p³) | p³ |
| #2 | Opacity (α¹) | p³, α¹ |
| #3 | DC colors = lowest order of SH (sh³) | p³, α¹, sh³ |
| #4 | Simplified scale (s¹) | p³, α¹, sh³ , s¹ |
| #5 | Scale (s³) and orientation (q⁴) | p³, α¹ , sh³ , s³, q⁴ |
| #6 | Higher order SH components (sh^{N}) | p³, α¹ , sh^{N} , s³, q⁴ |

In an example embodiment employing a coding and transmission order as reflected in Table 4, a decoder receives the information in sets 1 through 4 (the positions, opacity, DC colors, and simplified scale) and renders a simplified 3DGS model accordingly while the remaining information is being received. Once the remaining information is received (in sets 5 and 6), the rendering of simplified 3DGS model may be replaced with a rendering of the full 3DGS model.

**Table 5: Another proposed order of the elements of a 3DGS representation for progressive rendering.**

| Order | Element | Aggregated list of elements (with dimension) |
|---|---|---|
| #1 | Position (p³) | p³ |
| #2 | DC colors = lowest order of SH (sh³) | p³, sh³ |
| #3 | Simplified scale (s¹) | p³, sh³ , s¹ |
| #4 | Opacity (α¹) | p³, sh³ , s¹ , α¹ |
| #5 | Scale (s³) and orientation (q⁴) | p³, sh³ , s¹ , α¹, s³, q⁴ |
| #6 | Higher order SH components (sh^{N}) | p³, sh^{N} , s¹ , α¹, s³, q⁴ |

In an example embodiment employing a coding and transmission order as reflected in Table 5, a decoder receives the information in sets 1 through 4 (the positions, DC colors, simplified scale, and opacity) and renders a simplified 3DGS model accordingly while the remaining information is being received. Once the remaining information is received (in sets 5 and 6), the rendering of simplified 3DGS model may be replaced with a rendering of the full 3DGS model.

Example embodiments allow for a progressive rendering of the transmitted 3DGS representation.

By prioritizing the loading and display of some elements of the content, the perceived loading time by a user is reduced. Also, the user may be able to interact with the content before the complete 3DGS model is received.

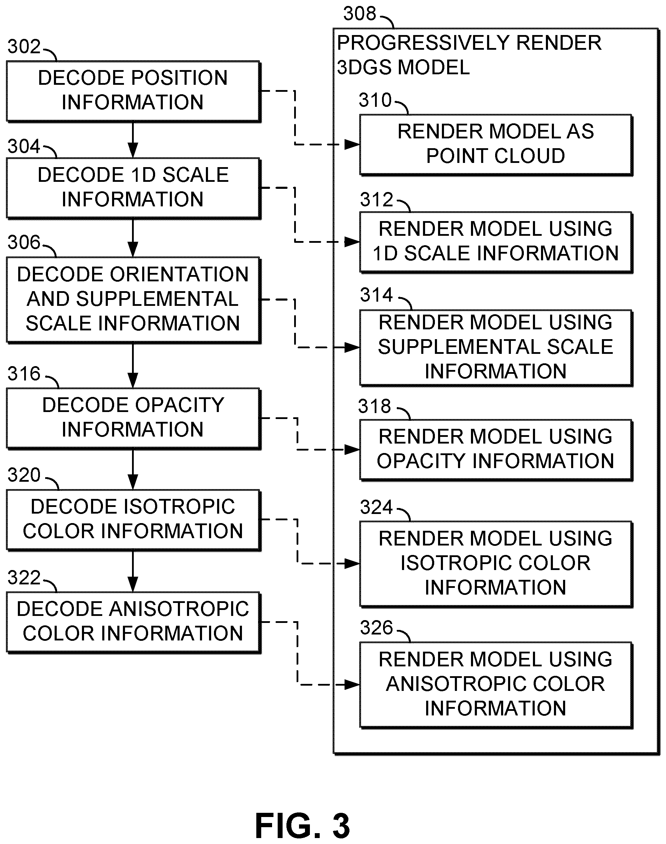

FIG. 3 is a flow diagram illustrating a method according to some embodiments. At 302, position information is decoded for each of a plurality of Gaussian primitives in a 3DGS model. After decoding the position information, at 304, one-dimensional scale information is decoded for each of the plurality of Gaussian primitives. At 306, after decoding the one-dimensional scale information, orientation information and supplemental scale information is decoded for each of the plurality of Gaussian primitives. At 308, the 3DGS model is progressively rendered based on at least some of the decoded information.

In some embodiments, to progressively render the 3DGS model, the 3DGS model is rendered at 310 as a point cloud using at least the position information without the one-dimensional scale information. Subsequently, at 312, the 3DGS model is rendered using the one-dimensional scale information in addition to the previously used information. In some embodiments, at 314, the 3DGS model is rendered using the orientation information and the supplemental scale information, in addition to the previously-received information (except to the extent that the supplemental scale information may be redundant with the one-dimensional scale information).

In some embodiments, after decoding of the position information, opacity information is decoded at 316 for each of the plurality of Gaussian primitives. In such a case, progressive rendering of the 3DGS model may include rendering the 3DGS model using at least the position information without the opacity information (e.g. at 310, 312, and/or 314) and subsequently rendering the 3DGS model at 318, further using the opacity information in addition to the previously-decoded information.

In some embodiments, after decoding the position information, isotropic color information is decoded at 320 for each of the plurality of Gaussian primitives. The isotropic color information may be zeroth-order spherical harmonic coefficients. After decoding the isotropic color information, anisotropic color information is decoded at 322 for each of the plurality of Gaussian primitives. The anisotropic color information may be higher-order spherical harmonic coefficients. Progressively rendering the 3DGS model may include rendering the 3DGS model at 324 using at least the position information and the isotropic color information without the anisotropic color information. Subsequently the 3DGS model may be rendered at 326 using the anisotropic color information in addition to the previously-decoded information.

It should be noted that the precise order in which different attributes are decoded may differ for different embodiments. However, advantageously, the position information is decoded before other attributes. In embodiments where 1D scale information and supplemental scale information are sent separately, which is not necessarily all embodiments, the 1D scale information is advantageously decoded before the supplemental scale information. In embodiments where isotropic color information and anisotropic color information are sent separately, which is not necessarily all embodiments, the isotropic color information is advantageously decoded before the anisotropic color information.

It should further be noted that the progressive rendering of the 3DGS model does not necessarily include a new rendering with the receipt of each new set of attributes. For example, even if all the sets of attributes listed in FIG. 3 are received at different times, it is not necessarily the case that every one of the renderings 310, 312, 314, 318, 324, 326 is performed. Advantageously, at least two renderings are performed, including a final rendering of the 3DGS model once all attributes have been received, and at least one provisional rendering based on less than all of the attributes. Which attributes are used in the provisional rendering may differ in different embodiments.

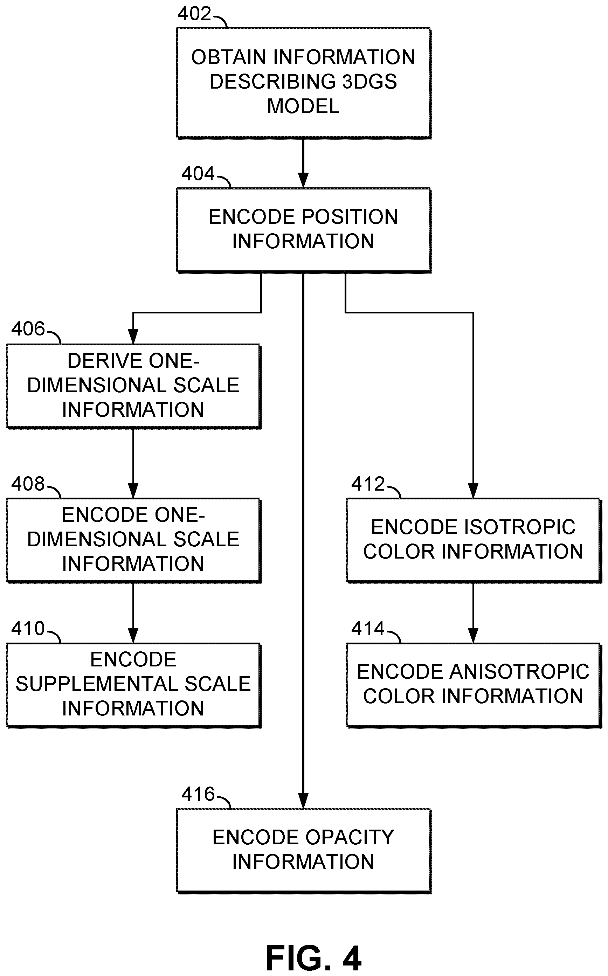

FIG. 4 is a flow diagram illustrating an encoding method according to some embodiments. At 402, information is obtained that describes a 3DGS model. The model includes position information and three-dimensional scale information for each of the Gaussian primitives of the model. At 404, the position information is encoded in a bitstream. At 406, one-dimensional scale information is derived from the three-dimensional scale information. At 408, the one-dimensional scale information is encoded in the bitstream. The one-dimensional scale information may be encoded at a location in the bitstream after a location of the position information. At 410, supplemental scale information is encoded in the bitstream. The supplemental scale information being encoded at a location in the bitstream after a location of the one-dimensional scale information. The three-dimensional scale information is derivable from the supplemental scale information alone or in combination with the one-dimensional scale information.

In some embodiments, the position information, the one-dimensional scale information, and the supplemental scale information are encoded in different attribute data units.

In some embodiments, the obtained information describing the 3DGS model further includes color information for each of the Gaussian primitives, where the color information includes isotropic color information and anisotropic color information for each of the plurality of Gaussian primitives. At 412, the isotropic color information, such as zero-order spherical harmonic coefficients, is encoded in the bitstream. The isotropic color information is encoded at a location in the bitstream after a location of the position information. At 414, the anisotropic color information, such as higher-order spherical harmonic coefficients, is encoded in the bitstream. The anisotropic color information is encoded at a location in the bitstream after a location of the one-dimensional scale information. In some embodiments, the position information, the one-dimensional scale information, the supplemental scale information, the isotropic color information, and the anisotropic color information are encoded in different attribute data units.

In some embodiments, the obtained information describing the 3DGS model further includes obtaining opacity information for each of the Gaussian primitives. The opacity information may be encoded in in the bitstream at 416. The opacity information may be encoded at a location in the bitstream after a location of the position information. In some embodiments, the position information, the one-dimensional scale information, the supplemental scale information, and the opacity information are encoded in different attribute data units.

### Example Systems

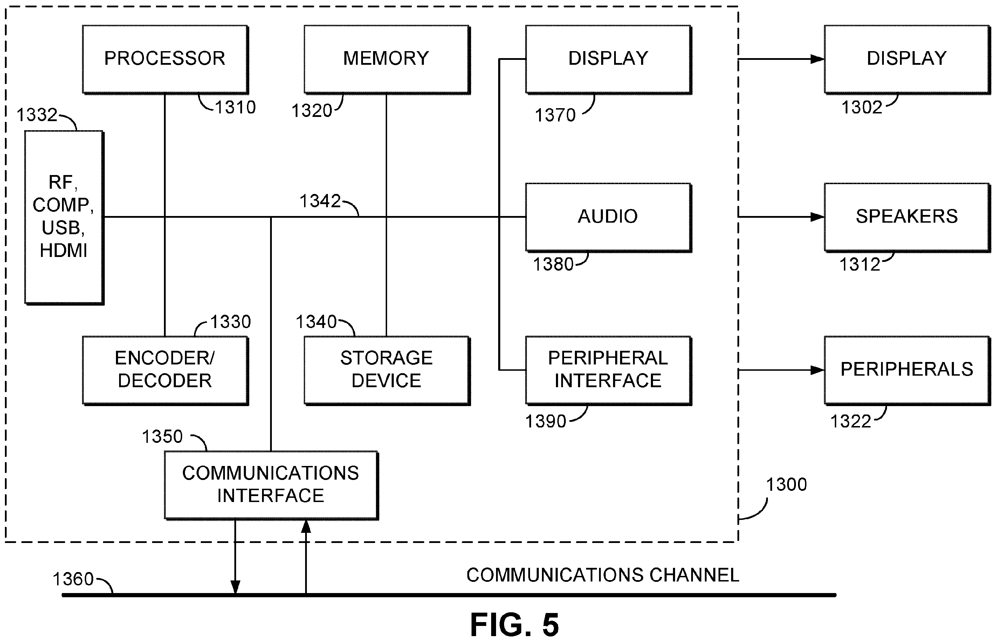

Some embodiments may be implemented on a system of one or more processors as illustrated in FIG. 5. FIG. 5 is a block diagram of an example of a system in which various aspects and embodiments are implemented. System 1300 can be embodied as a device including the various components described below and is configured to perform one or more of the aspects described in this document. Examples of such devices include, but are not limited to, various electronic devices such as personal computers, laptop computers, smartphones, tablet computers, digital multimedia set top boxes, digital television receivers, personal video recording systems, connected home appliances, and servers. Elements of system 1300, singly or in combination, can be embodied in a single integrated circuit (IC), multiple ICs, and/or discrete components. For example, in at least one embodiment, the processing and encoder/decoder elements of system 1300 are distributed across multiple ICs and/or discrete components. In various embodiments, the system 1300 is communicatively coupled to one or more other systems, or other electronic devices, via, for example, a communications bus or through dedicated input and/or output ports. In various embodiments, the system 1300 is configured to implement one or more of the aspects described in this document.

The system 1300 includes at least one processor 1310 configured to execute instructions loaded therein for implementing, for example, the various aspects described in this document. Processor 1310 can include embedded memory, input output interface, and various other circuitries as known in the art. The system 1300 includes at least one memory 1320 (e.g., a volatile memory device, and/or a non-volatile memory device). System 1300 includes a storage device 1340, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 1340 can include an internal storage device, an attached storage device (including detachable and non-detachable storage devices), and/or a network accessible storage device, as non-limiting examples.

System 1300 includes an encoder/decoder module 1330 configured, for example, to process data to provide an encoded video or decoded video, and the encoder/decoder module 1330 can include its own processor and memory. The encoder/decoder module 1330 represents module(s) that can be included in a device to perform the encoding and/or decoding functions. As is known, a device can include one or both of the encoding and decoding modules. Additionally, encoder/decoder module 1330 can be implemented as a separate element of system 1300 or can be incorporated within processor 1310 as a combination of hardware and software as known to those skilled in the art.

Program code to be loaded onto processor 1310 or encoder/decoder 1330 to perform the various aspects described in this document can be stored in storage device 1340 and subsequently loaded onto memory 1320 for execution by processor 1310. In accordance with various embodiments, one or more of processor 1310, memory 1320, storage device 1340, and encoder/decoder module 1330 can store one or more of various items during the performance of the processes described in this document. Such stored items can include, but are not limited to, the input point cloud, the decoded point cloud or portions of the decoded point cloud, the bitstream, matrices, variables, and intermediate or final results from the processing of equations, formulas, operations, and operational logic.

In some embodiments, memory inside of the processor 1310 and/or the encoder/decoder module 1330 is used to store instructions and to provide working memory for processing that is needed during encoding or decoding. In other embodiments, however, a memory external to the processing device (for example, the processing device can be either the processor 1310 or the encoder/decoder module 1330) is used for one or more of these functions. The external memory can be the memory 1320 and/or the storage device 1340, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 1300 can be provided through various input devices as indicated in block 1332. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples include composite video.

In various embodiments, the input devices of block 1332 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 1300 to other electronic devices across USB and/or HDMI connections. It is to be understood that various aspects of input processing, for example, Reed-Solomon error correction, can be implemented, for example, within a separate input processing IC or within processor 1310 as necessary. Similarly, aspects of USB or HDMI interface processing can be implemented within separate interface ICs or within processor 1310 as necessary. The demodulated, error corrected, and demultiplexed stream is provided to various processing elements, including, for example, processor 1310, and encoder/decoder 1330 operating in combination with the memory and storage elements to process the datastream as necessary for presentation on an output device.

Various elements of system 1300 can be provided within an integrated housing, Within the integrated housing, the various elements can be interconnected and transmit data therebetween using suitable connection arrangement 1342, for example, an internal bus as known in the art, including the Inter-IC (I2C) bus, wiring, and printed circuit boards.

The system 1300 includes communication interface 1350 that enables communication with other devices via communication channel 1360. The communication interface 1350 can include, but is not limited to, a transceiver configured to transmit and to receive data over communication channel 1360. The communication interface 1350 can include, but is not limited to, a modem or network card and the communication channel 1360 can be implemented, for example, within a wired and/or a wireless medium.

Data is streamed, or otherwise provided, to the system 1300, in various embodiments, using a wireless network such as a Wi-Fi network, for example IEEE 802.11 (IEEE refers to the Institute of Electrical and Electronics Engineers). The Wi-Fi signal of these embodiments is received over the communications channel 1360 and the communications interface 1350 which are adapted for Wi-Fi communications. The communications channel 1360 of these embodiments is typically connected to an access point or router that provides access to external networks including the Internet for allowing streaming applications and other over-the-top communications. Other embodiments provide streamed data to the system 1300 using a set-top box that delivers the data over the HDMI connection of the input block 1332. Still other embodiments provide streamed data to the system 1300 using the RF connection of the input block 1332. As indicated above, various embodiments provide data in a non-streaming manner. Additionally, various embodiments use wireless networks other than Wi-Fi, for example a cellular network or a Bluetooth network.

The system 1300 can provide an output signal to various output devices, including a display 1302, speakers 1312, and other peripheral devices 1322. The display 1302 of various embodiments includes one or more of, for example, a touchscreen display, an organic light-emitting diode (OLED) display, a curved display, and/or a foldable display. The display 1302 can be for a television, a tablet, a laptop, a cell phone (mobile phone), or other device. The display 1302 can also be integrated with other components (for example, as in a smart phone), or separate (for example, an external monitor for a laptop). The other peripheral devices 1322 include, in various examples of embodiments, one or more of a stand-alone digital video disc (or digital versatile disc) (DVR, for both terms), a disk player, a stereo system, and/or a lighting system. Various embodiments use one or more peripheral devices 1322 that provide a function based on the output of the system 1300. For example, a disk player performs the function of playing the output of the system 1300.

In various embodiments, control signals are communicated between the system 1300 and the display 1302, speakers 1312, or other peripheral devices 1322 using signaling such as AV.Link, Consumer Electronics Control (CEC), or other communications protocols that enable device-to-device control with or without user intervention. The output devices can be communicatively coupled to system 1300 via dedicated connections through respective interfaces 1370, 1380, and 1390. Alternatively, the output devices can be connected to system 1300 using the communications channel 1360 via the communications interface 1350. The display 1302 and speakers 1312 can be integrated in a single unit with the other components of system 1300 in an electronic device such as, for example, a television. In various embodiments, the display interface 1370 includes a display driver, such as, for example, a timing controller (T Con) chip.

The display 1302 and speaker 1312 can alternatively be separate from one or more of the other components, for example, if the RF portion of input 1332 is part of a separate set-top box. In various embodiments in which the display 1302 and speakers 1312 are external components, the output signal can be provided via dedicated output connections, including, for example, HDMI ports, USB ports, or COMP outputs.

The embodiments can be carried out by computer software implemented by the processor 1310 or by hardware, or by a combination of hardware and software. As a non-limiting example, the embodiments can be implemented by one or more integrated circuits. The memory 1320 can be of any type appropriate to the technical environment and can be implemented using any appropriate data storage technology, such as optical memory devices, magnetic memory devices, semiconductor-based memory devices, fixed memory, and removable memory, as non-limiting examples. The processor 1310 can be of any type appropriate to the technical environment, and can encompass one or more of microprocessors, general purpose computers, special purpose computers, and processors based on a multi-core architecture, as non-limiting examples.

### Further Embodiments

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A method comprising:
decoding position information for each of a plurality of Gaussian primitives in a 3D Gaussian splatting, 3DGS, model;
after decoding the position information, decoding one-dimensional scale information for each of the plurality of Gaussian primitives;
after decoding the one-dimensional scale information, decoding orientation information and supplemental scale information for each of the plurality of Gaussian primitives; and
progressively rendering the 3DGS model based on at least some of the decoded information.

2. An apparatus comprising one or more processors configured to perform at least:
decoding position information for each of a plurality of Gaussian primitives in a 3D Gaussian splatting, 3DGS, model;
after decoding the position information, decoding one-dimensional scale information for each of the plurality of Gaussian primitives;
after decoding the one-dimensional scale information, decoding orientation information and supplemental scale information for each of the plurality of Gaussian primitives; and
progressively rendering the 3DGS model based on at least some of the decoded information.

3. The method of claim 1, or the apparatus of claim 2, wherein progressively rendering the 3DGS model comprises:
rendering the 3DGS model as a point cloud using at least the position information without the one-dimensional scale information; and
subsequently rendering the 3DGS model, further using the one-dimensional scale information.

4. The method of claim 1, or claim 3 as it depends from claim 1, or the apparatus of claim 2, or claim 3 as it depends from claim 2, wherein progressively rendering the 3DGS model comprises:
rendering the 3DGS model using at least the position information and the one-dimensional scale information without the orientation information and without the supplemental scale information; and
subsequently rendering the 3DGS model, further using the orientation information and the supplemental scale information.

5. The method of claim 1, or claims 3-4 as they depend from claim 1, or the apparatus of claim 2, or claims 3-4 as they depend from claim 2, further comprising:
after decoding the position information, decoding isotropic color information for each of the plurality of Gaussian primitives; and
after decoding the isotropic color information, decoding anisotropic color information for each of the plurality of Gaussian primitives.

6. The method of claim 5 as it depends from claim 1, or the apparatus of claim 5 as it depends from claim 2, wherein progressively rendering the 3DGS model comprises:
rendering the 3DGS model using at least the position information and the isotropic color information without the anisotropic color information; and
subsequently rendering the 3DGS model, further using the anisotropic color information.

7. The method of claim 1, or claims 3-6 as they depend from claim 1, or the apparatus of claim 2, or claims 3-6 as they depend from claim 2, further comprising:
after decoding the position information, decoding opacity information for each of the plurality of Gaussian primitives;
wherein progressively rendering the 3DGS model comprises:
rendering the 3DGS model using at least the position information without the opacity information; and
subsequently rendering the 3DGS model, further using the opacity information.

8. A method comprising:
obtaining information describing a 3D Gaussian splatting, 3DGS, model including a plurality of Gaussian primitives, the model including position information and three-dimensional scale information for each of the Gaussian primitives;
encoding the position information in a bitstream;
deriving one-dimensional scale information from the three-dimensional scale information;
encoding the one-dimensional scale information in the bitstream, the one-dimensional scale information being encoded at a location in the bitstream after a location of the position information; and
encoding supplemental scale information in the bitstream, the supplemental scale information being encoded at a location in the bitstream after a location of the one-dimensional scale information, the three-dimensional scale information being derivable from the supplemental scale information alone or in combination with the one-dimensional scale information.

9. An apparatus comprising one or more processors configured to perform at least:
obtaining information describing a 3D Gaussian splatting, 3DGS, model including a plurality of Gaussian primitives, the model including position information and three-dimensional scale information for each of the Gaussian primitives;
encoding the position information in a bitstream;
deriving one-dimensional scale information from the three-dimensional scale information;
encoding the one-dimensional scale information in the bitstream, the one-dimensional scale information being encoded at a location in the bitstream after a location of the position information; and
encoding supplemental scale information in the bitstream, the supplemental scale information being encoded at a location in the bitstream after a location of the one-dimensional scale information, the three-dimensional scale information being derivable from the supplemental scale information alone or in combination with the one-dimensional scale information.

10. The method of claim 8, or the apparatus of claim 9, wherein the position information, the one-dimensional scale information, and the supplemental scale information are encoded in different attribute data units.

11. The method of claim 8, or claim 10 as it depends from claim 8, or the apparatus of claim 9, or claim 10 as it depends from claim 9, further comprising:
obtaining color information for each of the Gaussian primitives, the color information including isotropic color information and anisotropic color information for each of the plurality of Gaussian primitives;
encoding the isotropic color information in the bitstream, the isotropic color information being encoded at a location in the bitstream after a location of the position information; and
encoding the anisotropic color information in the bitstream, the anisotropic color information being encoded at a location in the bitstream after a location of the one-dimensional scale information.

12. The method of claim 11 as it depends from claim 8, or the apparatus of claim 10 as it depends from claim 9, wherein the position information, the one-dimensional scale information, the supplemental scale information, the isotropic color information, and the anisotropic color information are encoded in different attribute data units;
further comprising obtaining orientation information for each of the Gaussian primitives and encoding the orientation information in a further attribute data unit.

13. The method of claim 8, or claims 10-12 as they depend from claim 8, or the apparatus of claim 9, or claims 10-12 as they depend from claim 9, further comprising:
obtaining opacity information for each of the Gaussian primitives; and
encoding the opacity information in the bitstream, the opacity information being encoded at a location in the bitstream after a location of the position information.

14. The method of claim 13 as it depends from claim 8, or the apparatus of claim 13 as it depends from claim 9, wherein the position information, the one-dimensional scale information, the supplemental scale information, and the opacity information are encoded in different attribute data units;
further comprising obtaining orientation information for each of the Gaussian primitives and encoding the orientation information in a further attribute data unit.

15. A bitstream comprising:
a first attribute data unit comprising position information for each of a plurality of Gaussian primitives in a 3D Gaussian splatting, 3DGS, model;
a second attribute data unit comprising one-dimensional scale information for each of the Gaussian primitives;
a third attribute data unit comprising supplemental scale information for each of the Gaussian primitives, wherein three-dimensional scale information is derivable from the supplemental scale information alone or in combination with the one-dimensional scale information;
a fourth attribute data unit comprising orientation information for each of the Gaussian primitives;
a fifth attribute data unit comprising opacity information for each of the Gaussian primitives;
a sixth attribute data unit comprising anisotropic color information for each of the Gaussian primitives; and
a seventh attribute data unit comprising isotropic color information for each of the Gaussian primitives;
wherein the first attribute data unit is before the second through seventh attribute data units, and wherein the second attribute data unit is before the third attribute data unit.
